(19) Europäisches Patentamt

European Patent Office

Office européen des brevets

(11) **EP 1 034 432 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.$^7$: **G01N 35/00**

(21) Anmeldenummer: **98958250.7**

(22) Anmeldetag: **23.11.1998**

(86) Internationale Anmeldenummer:
**PCT/EP98/07558**

(87) Internationale Veröffentlichungsnummer:
**WO 99/027372 (03.06.1999 Gazette 1999/22)**

(54) **VERFAHREN UND VORRICHTUNG ZUR BEWEGUNGSERFASSUNG AN MIKROPARTIKELN**

PROCESS AND DEVICE FOR DETECTING MICROPARTICLE MOVEMENT

PROCEDE ET DISPOSITIF POUR DETECTER LE MOUVEMENT DE MICROPARTICULES

(84) Benannte Vertragsstaaten:
**CH DE GB LI**

(30) Priorität: **24.11.1997 DE 19752010**

(43) Veröffentlichungstag der Anmeldung:
**13.09.2000 Patentblatt 2000/37**

(73) Patentinhaber: **Max-Planck-Gesellschaft zur Förderung der Wissenschaften e.V.
80539 München (DE)**

(72) Erfinder:
• **KALKUM, Markus**
  **D-10967 Berlin (DE)**
• **KIETZMANN, Markus**
  **D-82515 Wolfratshausen (DE)**

• **MÜLLER, Martin**
  **D-12526 Berlin (DE)**

(74) Vertreter: **Hertz, Oliver, Dr.
v. Bezold & Partner,
Patentanwälte
Akademiestrasse 7
80799 München (DE)**

(56) Entgegenhaltungen:
**EP-A- 0 601 213        EP-A- 0 775 587
US-A- 5 508 200**

• **LEMMO A V ET AL: "CHARACTERIZATION OF AN INKJET CHEMICAL MICRODISPENSER FOR COMBINATORIAL LIBRARY SYNTHESIS" ANALYTICAL CHEMISTRY, Bd. 69, Nr. 4, 15. Februar 1997, Seiten 543-551, XP000681609**

**Beschreibung**

Die Erfindung betrifft ein Verfahren zur Erfassung von Bewegungseigenschaften von Mikropartikeln, die von einer Mikrodispensereinheit auf ein Target bewegt werden, insbesondere ein Verfahren zur Erfassung von Auftreffpunkten und -geschwindigkeiten von Mikropartikeln und ein Positionskalibrierungsverfahren für eine Mikrodispensereinheit mit einer Vielzahl einzelner Mikrodispenser. Die Erfindung betrifft ferner Vorrichtungen zur Implementierung der Verfahren und eine Einrichtung zur Mikropartikeldetektion.

Es ist allgemein bekannt, kleinste Substanz- oder Lösungsmengen in Form kleiner fester Partikel oder Tröpfchen (Mikropartikel) unter Verwendung eines Mikrodispensiergerätes auf einem Substrat zu plazieren. Das Mikrodispensiergerät erlaubt ein gezieltes Pipettieren bestimmter Volumina und ein Positionieren entsprechend bestimmter Ortskoordinaten. Zum aufeinanderfolgenden Plazieren verschiedener Substanzen besitzt ein Mikrodispensiergerät gewöhnlich einen Dispensierkopf mit mehreren Dispensern, die zum Positionieren der jeweiligen Substanzen eingerichtet sind. Um die Substanzen beispielsweise für Reaktionszwecke oder zur Erzeugung definierter Mikrosubstanzraster ortsgenau positionieren zu können, ist es erforderlich, die Zielpositionen der dispensierten Partikel genau zu kennen.

Gewöhnlich ist die Position eines Dispensierkopfes in Bezug auf ein Targetsubstrat mit einer Stelleinrichtung manipulierbar, mit der bestimmte Kopfpositionen einstellbar sind. Bei ortsfester Anbringung der einzelnen Dispenser des Dispensierkopfes besitzen die Dispenser definierte Referenzpositionen, die sich aus der Kopfposition und der relativen Anordnung des jeweiligen Dispensers in Bezug auf einen Referenzdispenser ergeben. Die praktische Anwendung von Dispensierköpfen zeigt, daß bei gegebenen Referenzpositionen der Dispenser auf dem Substrattarget Auftreffpunkte gebildet werden, deren Relativkoordinaten nicht den Relativkoordinaten der Dispenser entsprechen. Dies ist in Fig. 8 schematisch am Beispiel einer Dispenserreihe 30 erläutert. Die einzelnen Dispenser 30a, 30b, 30c,... sind in einer geraden Reihe angeordnet. Es kann sich dabei beispielsweise um Mikropipetten oder dergl. handeln, aus denen Mikrotropfen auf ein Substrat 60 geschossen werden. Die Auftreffpunkte 61a, 61b, 61c sind aufgrund minimaler Fehlausrichtungen der Dispenser oder mechanischer Instabilitäten nicht mehr in einer geraden Reihe angeordnet, was besonders deutlich im untersten Teil von Fig. 8 durch die Überlagerung der Dispenserpositionen und der Auftreffpunkte erkennbar ist. Dieses Verhalten ist insbesondere dann problematisch, wenn eine erste Substanz aus einem ersten Dispenser auf das Substrat bewegt wird und nach anschließendem Verfahren des Dispensierkopfes eine zweite Substanz aus einem zweiten Dispenser auf genau dieselbe Substratposition wie die erste Substanz bewegt werden soll. Hierzu benötigt die Stelleinrichtung des Dispensierkopfes neben den Dispenserrelativpositionen auch eine Information über die entsprechenden Auftreffpunktrelativpositionen des Dispensierkopfes.

Es ist allgemein bekannt, daß bislang zur Bestimmung der Auftreffpunkte oder der Zielpositionen dispensierter Flüssigkeiten optische Systeme eingesetzt werden. So wird beispielsweise bei einem stroboskopischen Verfahren (A. Schober et al. in "BioTechniques", Bd. 15, 1993, S. 324 ff.) mit einer ersten Kamera der Tropfenabriß und mit einer zweiten Kamera die Zielposition des jeweils zu beobachtenden Tropfens ermittelt. Alternativ ist es möglich, auf einem Substrat erzeugte Substanzraster optisch zu analysieren. Neben dem hohen gerätetechnischen Aufwand derartiger Detektionsverfahren besitzen diese den Nachteil, daß zur Automatisierung der Einsatz technisch aufwendiger Bilderkennungsverfahren erforderlich wäre. Damit ergibt sich eine hohe Kostenintensität herkömmlicher Systeme sowie aufgrund deren Kompliziertheit eine starke Fehleranfälligkeit. Aufgrund der resultierenden Unzuverlässigkeit sind herkömmliche Mikrodispensiersysteme trotz des hohen technologischen Einsatzpotentials bei der Bearbeitung von hochparallelen analytischen Aufgaben in der kombinatorischen Chemie in ihrem Anwendungsbereich bisher beschränkt.

Die Probleme bei der Erfassung der Bewegung dispensierter Partikel treten nicht nur bei der oben illustrierten "Drop-on-Demand-Technik" auf, sondern allgemein bei allen Mikropartikelplazierungs- oder schußeinrichtungen, mit denen Mikropartikel entlang vorbestimmter Bahnen auf bestimmte Positionen in einem Targetbereich geführt werden sollen.

Der Erfindung liegt die Aufgabe zugrunde, ein verbessertes Verfahren zur Erfassung der Bewegungseigenschaften von Mikropartikeln, insbesondere von deren Auftreffpunkten und/oder -geschwindigkeiten auf Targetsubstraten, anzugeben, daß eine hohe Zuverlässigkeit besitzt und einfach realisierbar ist. Die Aufgabe der Erfindung besteht ferner darin, eine Vorrichtung zur Implementierung eines derartigen Verfahrens, insbesondere eine verbesserte Mikropartikeldetektorvorrichtung, anzugeben.

Die Aufgabe der Erfindung wird mit einem Verfahren und einer Vorrichtung mit den Merkmalen der Patentansprüche 1, 6 bzw. 10 gelöst. Vorteilhafte Ausführungsformen der Erfindung ergeben sich aus den abhängigen Ansprüchen.

Erfindungsgemäß werden die Auftreffpunkte der Mikropartikel, die Relativkoordinaten der Auftreffpunkte und/oder deren Abweichung von den Relativkoordinaten der Dispenserpositionen mit einer Partikeldetektorvorrichtung erfaßt, die zwei jeweils linear begrenzte, eine Targetebene aufspannende Wechselwirkungsbereiche aufweist und zur Abgabe eines Detektorsignals eingerichtet ist, sobald ein Mikropartikel in einen der Wechselwirkungsbereiche eintritt. Bei einem erfindungsgemäßen Verfahren wird bei einem ersten Kalibrierungsschritt zunächst ein Dispensierkopf mit einer Vielzahl von Dispensern, von denen ein Dispenser als Referenzdispenser eine Folge von Mikropartikeln abgibt, entlang zweier gerader, paralleler Fahrstrecken derart über die Detektorvorrichtung gefahren, daß die durch die Mikropartikelfolge gebildeten Tropfenreihen an vier Referenzauftreffpunkten auf die genannten Wechselwirkungsbereiche treffen. Zu den Referenzauftreffpunkten werden als Referenzdispenserkoordinaten die jeweils an der Stelleinrichtung eingestellten Dispensierkopfkoordinaten erfaßt. Anschließend wird bei einem Meßschritt der Dispensierkopf auf einem Meßfahrweg, der mit einem der Kalibrierfahrwege übereinstimmt oder zu einem von diesen parallel verläuft, über die Detektorvorrichtung gefahren, so daß jeweils bei Erreichen eines der Wechselwirkungsbereiche einer der übrigen Dispenser (Meßdispenser) eine Folge von Mikropartikeln abgibt. Sobald ein Mikropartikel aus einem Meßdispenser auf einen Wechselwirkungsbereich trifft, wird die Meßdispenserposition relativ zur Position des Dispensierkopfes erfaßt und daraus der Auftreffpunkt auf den Wechselwirkungsbereich ermittelt. Schließlich ergibt der Abstand der Relativkoordinaten des Mikropartikelauftreffpunktes aus dem Meßdispenser zu der entsprechenden Meßdispenserposition die gesuchte Abweichung zwischen der Anordnung des Auftreffpunkts des Mikropartikels aus dem Meßdispenser relativ zum Referenzdispenserauftreffpunkt einerseits und der Anordnung des Meßdispensers relativ zum Referenzdispenser andererseits.

Gemäß einer bevorzugten Ausführungsform der Erfindung werden die ermittelten Abweichungsrelativkoordinaten zur Erzeugung eines Steuersignals für die Stelleinrichtung des Dispensierkopfes verwendet, um die Positionierung eines Dispensers in Bezug auf einen bestimmten Substratort jeweils in Abhängigkeit vom erwarteten Auftreffpunkt aus dem betrachteten Dispenser zu korrigieren.

Je nach Auslegung des Wechselwirkungsbereiches ist es möglich, neben den obengenannten Bewegungsparametern auch die Mikropartikelgeschwindigkeit zu erfassen.

Eine erfindungsgemäße Vorrichtung wird gemäß einem ersten Gesichtspunkt durch die genannte Detektorvorrichtung mit zwei linear begrenzten, eine Targetebene aufspannenden Wechselwirkungsbereichen gebildet. Je nach dem zugrundeliegenden Meßprinzip ist die Detektorvorrichtung als elektroakustischer Sensor oder als elektrooptischer Sensor ausgelegt. Im Falle eines elektroakustischen Sensors wird jeder der zueinander nicht parallelen Wechselwirkungsbereiche durch ein Schwingungselement gebildet, das mindestens eine gerade Begrenzung aufweist, bei deren Erreichen durch einen Mikropartikel aus den entlang der genannten Fahrstrecken gebildeten Folgen von Mikropartikeln im Schwingungselement eine mechanische Schwingung ausgelöst wird. Die mechanische Schwingung wird mit einem geeigneten Schallwandler in ein Detektorsignal umgewandelt, das nach einer geeigneten Signalverarbeitung anzeigt, welcher der Wechselwirkungsbereiche von einem Mikropartikel getroffen wurde. Das Schwingungselement hat vorzugsweise die Form eines gespannten elastischen Fadens, der mit einer Membran eines Mikrophons verbunden ist, das als Schallwandler wirkt. Die Detektorvorrichtung besitzt in diesem Fall zwei gerade aufgespannte, unter einem vorbestimmten Winkel (≠ 0) ausgerichtete Fäden, vorzugsweise aus Metall, die die Targetebene aufspannen und jeweils mit einem Mikrophon verbunden sind. Bei der Gestaltung als elektrooptischer Sensor wird jeder Wechselwirkungsbereich durch einen geraden, parallelen Lichtstrahl (z.B. Laserlicht) gebildet. Die Erfassung des Auftreffens eines Mikropartikels im Wechselwirkungsbereich erfolgt mit einem photoelektrischen Element wie z.B. einer schnell arbeitenden Photodiode, mit dem eine Transmissions-änderung im Lichtweg oder einer Streulichtmessung durchgeführt wird.

Gemäß einem weiteren Gesichtspunkt besteht eine Vorrichtung gemäß der Erfindung aus einer Kombination der genannten Detektorvorrichtung mit einer Signalverarbeitungsschaltung und einem Positionsgeber, die mit einer Stelleinrichtung eines Dispensierkopfes zusammenwirken. Eine derartige Anordnung ist vorteilhafterweise zur Kalibrierung der Auftreffpunkte einer Gruppe von Dispensern eines Dispensierkopfes verwendbar.

Die Erfindung besitzt den Vorteil, daß die Auftreffpunkte eines Dispensierkopfes oder eines entsprechenden Mikropartikel-Plazierungsgerätes vollautomatisierbar, schnell und zuverlässig ermittelt werden können. Die Positionsbestimmung erfolgt mit einem einfach gebauten Detektor unter Vermeidung herkömmlicher Bilderkennungsverfahren. Neben der hohen Empfindlichkeit bei der Einzelpartikeldetektion liegen die Vorteile der Erfindung ferner in der Störfestigkeit, Geschwindigkeit, Genauigkeit und den verhältnismäßig geringen Kosten des Detektors.

Weitere Vorteile und Einzelheiten der Erfindung werden im folgenden unter Bezug auf die Zeichnungen beschrieben. Es zeigen:

Fig. 1: eine schematische Draufsicht auf einen Dispensierkopf und eine Detektorvorrichtung zur Illustration des erfindungsgemäßen Verfahrens;

Fig. 2: eine geometrische Darstellung zur Illustration des Auswertungsschemas gemäß der Erfindung;

Fig. 3: eine Perspektivansicht einer Detektorvorrichtung gemäß der Erfindung;

Fig. 4: eine Perspektivansicht von Einzelheiten einer Detektorvorrichtung gemäß Fig. 3;

Fig. 5: eine schematische Blockdarstellung einer erfindungsgemäßen Kombination der Detektorvorrichtung mit der Stelleinrichtung eines Dispensierkopfes;

Fig. 6: eine Blockdarstellung einer Signalverarbeitungsschaltung aus Fig. 5;

Fign. 7A, B: Kurvendarstellungen zur Illustration von Signalverläufen der Detektorvorrichtung; und

Fig. 8: eine Schemadarstellung der Abweichung zwischen Relativdispenserkoordinaten und Relativauftreffpunktkoordinaten.

Die Erfindung wird im folgenden am Beispiel eines horizontal manipulierbaren Dispensierkopfes mit einer linearen Dispenseranordnung, die beispielsweise durch eine Gruppe von piezoelektrisch arbeitenden Mikropipetten gebildet wird, zum Aufbringen mikroskopisch kleiner Tröpfchen auf einem Substrat beschrieben. Die Erfindung ist jedoch nicht auf eine derartige Mikropipettenanordnung mit vertikaler Tropfenbewegung beschränkt, sondern entsprechend bei allen Arten von Mikropartikelplazierungseinrichtungen anwendbar, die auch zweidimensionale Dispenseranordnungen tragen oder zur Partikelbewegung mit horizontalen Bewegungskomponenten eingerichtet sein können. Ein Mikropartikel ist somit ein flüssiger Tropfen oder fester Körper mit einer charakteristischen Größe, die im Submillimeterbereich (bis hin zur Wellenlänge sichtbaren Lichts) reicht. Die Erfindung wird außerdem unter Bezug auf die Ausführungsform der Detektorvorrichtung als elektroakustischer Sensor beschrieben. Die entsprechenden Verfahrensschritte der Kalibrierung, Auftreffpunktbestimmung, Dispensierkopfpositionierung, Signalauswertung usw. sind jedoch im Falle eines elektrooptischen Sensors ohne Beschränkung analog anwendbar.

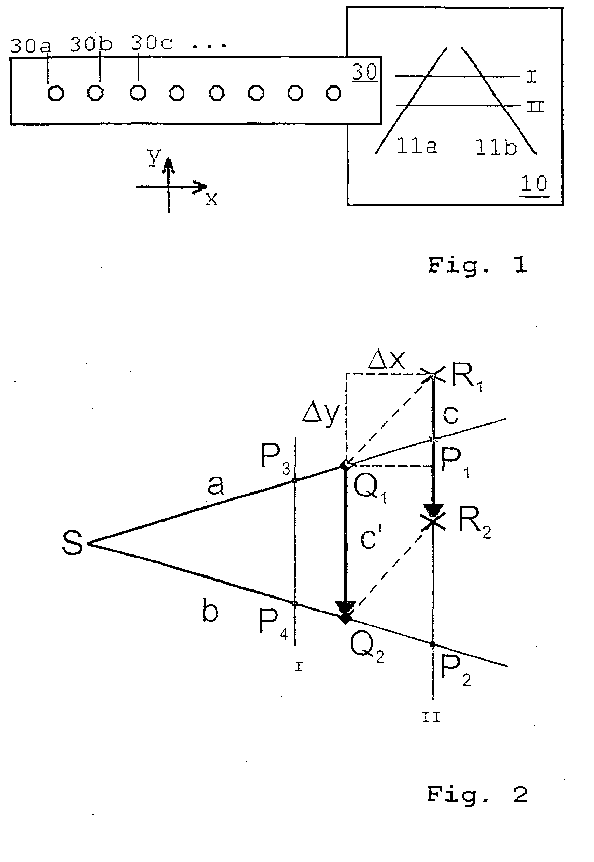

Fig. 1 zeigt schematisch die relative Ausrichtung eines Dispensierkopfes 30 und einer Detektorvorrichtung 10 in Draufsicht. Der Dispensierkopf 30 ist in der Zeichenebene in den x- und y-Richtungen verfahrbar. Die x- und y-Richtungen spannen eine Ebene parallel zu der von den Detektordrähten 11a, 11b aufgespannten Targetebene auf. Zur Durchführung der folgenden Verfahrensschritte wird der Dispensierkopf 30 mehrfach entlang von mindestens zwei geraden, parallelen, voneinander beabstandeten Fahrstrecken I, II, deren senkrechte Projektionen auf die Targetebene die Detektordrähte 11a, 11b schneiden, über die Detektorvorrichtung gefahren. Der Dispensierkopf wird mit einer Stelleinrichtung (s. unten) betätigt, die mit einem Positionsgeber (s. unten) verbunden ist. Der Positionsgeber liefert Koordinaten in einem Umgebungs-Koordinatensystem, das den Bezug für alle im folgenden genannten Ortsangaben darstellt. Diese umfassen die aktuellen Dispensierkopfkoordinaten, die zur Vereinfachung mit den Koordinaten eines Referenzdispensers (z.B. Dispenser 30a) gleichgesetzt werden. Die Koordinaten der übrigen Dispenser (Meßdispenser 30b, 30c,...) ergeben sich aus den Dispensierkopfkoordinaten und den jeweils bekannten, meßbaren Koordinaten der Meßdispenser relativ zum Referenzdispenser.

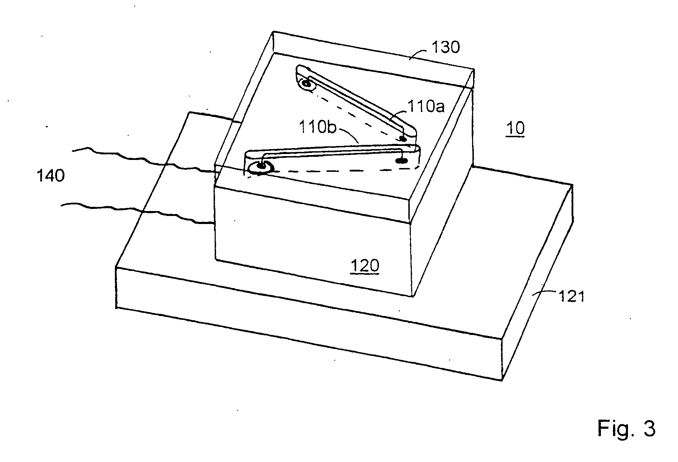

Zunächst werden die Referenzdispenserkoordinaten (die Dispensierkopfkoordinaten) an den Dispensierkopfpositionen erfaßt, an denen ein vom Referenzdispenser ausgehender Mikrotropfen einen der Detektordrähte 11a, 11b trifft. Für die spätere Meßdispenserkoordinatenauswertung werden mindestens vier Auftreffpunkte auf Detektordrähte benötigt, die den vier Schnittpunkten der Projektionen der Fahrstrecken I, II mit den Detektordrähten 11a, 11b entsprechen. Zur Referenzdispenserkoordinatenerfassung wird der Dispensierkopf zunächst auf die Fahrstrecke I ausgerichtet und auf dieser über die Detektorvorrichtung gefahren. Bei konstanter Fahrgeschwindigkeit und konstanter Tropfenabgaberate werden die Detektordrähte 11a, 11b überfahren. Die Fahrgeschwindigkeit, die Frequenz, der Tropfendurchmesser und der Dispenser-Draht-Abstand werden in Abhängigkeit von der jeweiligen Anwendung und den Dimensionen der Detektorvorrichtung geeignet ausgewählt. So wird insbesondere die Frequenz in Bezug auf die Fahrgeschwindigkeit so gewählt, daß die realisierte Zahl der Tropfen pro Längeneinheit wesentlich geringer als die Ortsauflösung der Stelleinrichtung des Dispensierkopfes ist. Beispielsweise betragen bei einer Detektorvorrichtung mit Detektordrähten einer Länge von rd. 3 cm und einem Abstand im Bereich von rd. 1,5 bis 3 cm die Fahrgeschwindigkeit des Dispensierkopfes rd. 2,5 mm/s, die Tropfenabgaberate oder Frequenz rd. 500 Tropfen pro Sekunde, der Tropfendurchmesser rd. 50 bis 60 $\mu$m und der Dispenser-Draht-Abstand rd. 2-3 mm. Beim Überfahren des ersten Detektordrahtes 11a entsprechend der Position $P_1$ (s. Fig. 2) wird dieser von den Mikrotropfen getroffen. Schon das erste Streifen eines Mikrotropfens bewirkt eine Auslenkung des Detektordrahtes und die (unten beschriebene) Erzeugung eines Detektorsignals, auf das die aktuellen Referenzdispenserkoordinaten gespeichert werden. Die Speicherung erfolgt unter gleichzeitiger Prüfung, ob ein Störsignal vorgelegen hat. Falls dies der Fall ist, wird das Detektorsignal verworfen. Nach dem Treffen des ersten Detektordrahtes 11a bei $P_1$ wird der Dispensierkopf 30 weiter zum zweiten Detektordraht 11b zur Erfassung der Referenzdispenserkoordinaten entsprechend dem Punkt $P_2$ gefahren. Anschließend erfolgt der gleiche Ablauf entlang der parallelen, beabstandeten Fahrstrecke II. Der Abstand zwischen den Fahrstrecken I, II wird geeignet zur Erzielung einer genügenden Meßgenauigkeit gewählt und kann beispielsweise rd. 1 bis 3 cm betragen.

Sobald die Referenzdispenserkoordinaten entsprechend den Auftreffpunkten $P_1$ bis $P_4$ ermittelt

worden sind, erfolgt die Bestimmung der Auftreffpunkte von Mikrotropfen aus jeder der übrigen Meßpipetten 30b, 30c.... Hierzu wird der Dispensierkopf 30 entlang einer der Fahrstrecke I, II oder, falls nach den ersten Kalibrierschritten substanzabhängig eine Verschmutzung der Detektordrähte entlang dieser Fahrstrecken erwartet wird, entlang einer dritten, parallelen Fahrstrecke über die Detektorvorrichtung 10 gefahren. Zur Erfassung der Auftreffpunkte jeder der Meßdispenser ist es möglich, die Detektorvorrichtung entsprechend der Zahl der Meßdispenser mehrfach jeweils unter Abgabe von Mikrotropfen aus einem der Meßdispenser zu überfahren. Alternativ ist es jedoch möglich, den Dispensierkopf nur einfach über die Detektorvorrichtung zu fahren und aufeinanderfolgend jeweils eine Tropfenfolge nur aus einem der Meßdispenser abzugeben, wenn dieser sich über einem der Detektordrähte befindet. Zur Vermeidung von Signalfehlern durch eine Detektordrahtverunreinigung kann das mehroder einfache Überfahren der Detektorvorrichtung mit einer simultanen Verstellung des Dispensierkopfes senkrecht zur Fahrtrichtung kombiniert werden, so daß der Detektordraht jeweils an einer anderen Stelle von einem Mikrotropfen getroffen wird. Die Auftreffpunkte von Mikrotropfen aus Meßdispensern werden im folgenden mit $Q_1, Q_2$ bezeichnet.

Aus den Referenzdispenserkoordinaten entsprechend den Referenzauftreffpunkten $P_1$ bis $P_4$ und den durch Messung bekannten Meßdispenserkoordinaten $R_1$, $R_2$ werden wie folgt die Auftreffpunkte $Q_1$, $Q_2$ der Mikrotropfen aus den Meßdispensern berechnet (s. Fig. 2).

Als erstes werden die Geradengleichungen der Detektordrähte jeweils aus den Referenzdispenserkoordinaten für die Referenzauftreffpunkte $P_1$, $P_3$ bzw. $P_2$, $P_4$ ermittelt. Anschließend werden aus den Geradengleichungen die Koordinaten des (gedachten) Schnittpunktes S der beiden Detektordrähte ermittelt. Die Strecken $|SQ_1|$ und $|SQ_2|$ ergeben sich aus dem Strahlensatz wie folgt:

$$|SQ_1| = (|Q_1 Q_2| \cdot |SP_1|) / |P_1 P_2|$$

$$|SQ_2| = (|Q_1 Q_2| \cdot |SP_1|) / |P_1 P_2|$$

Da die Meßdispensernkoordinaten $R_1$, $R_2$ bekannt sind, an denen sich der jeweilige Meßdispensern zum Zeitpunkt des Mikrotropfenauftreffens befindet, und die Strecken $|Q_1 Q_2|$ und $|R_1 R_2|$ gleich sind, kann $|Q_1 Q_2|$ in den Gleichungen durch $|R_1 R_2|$ substituiert werden. Damit sind die Beträge der jeweils von S nach $Q_1$ bzw. $Q_2$ führenden Vektoren bekannt. Da deren Richtung wiederum mit den von S nach $P_1$ bzw. $P_2$ führenden Vektoren übereinstimmt, ist zur Ermittlung der Koordinaten der Punkte $Q_1$, $Q_2$ lediglich noch das Betragsverhältnis $|SQ_1|/|SP_1|$ bzw. $|SQ_2|/|SP_2|$ zu berück-

sichtigen, das in beiden Fällen $|R_1 R_2|/|P_1 P_2|$ beträgt.

Die so ermittelten Koordinaten der Punkte $Q_1$, $Q_2$ beziehen sich auf das oben genannte Koordinatensystem des Positionsgebers. Die Abweichung dieser Koordinaten $\Delta x \Delta y$ von den Koordinaten des Meßdispensers $R_1$, $R_2$ stellt die gesuchte Abweichung des Auftreffpunktes von der Position des Meßdispensers dar. Diese Abweichungskoordinaten können im Rahmen einer Dispensierkopfkalibrierung verwendet werden, um die Auftreffpunkte jedes Dispensers eines Dispensierkopfes reproduzierbar zu erfassen oder um bei Betrieb die Position eines Dispensierkopfes zur Realisierung einer bestimmten Dispensierposition in Bezug auf einen gewünschten Substratauftreffpunkt zu korrigieren.

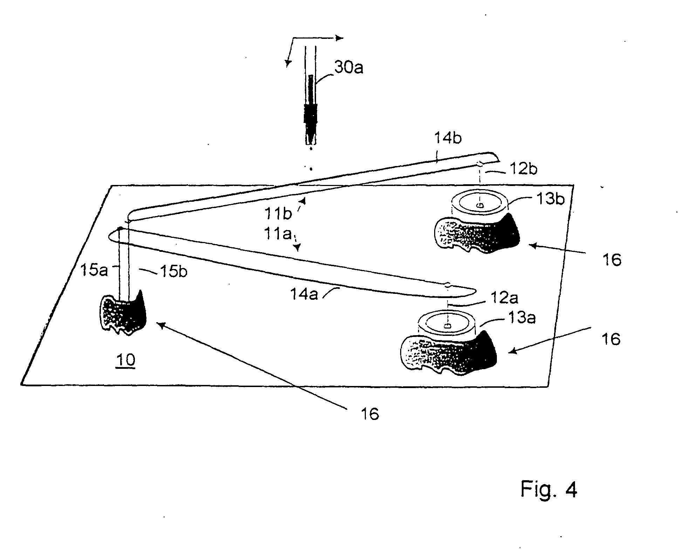

Im folgenden werden unter Bezug auf die Figuren 3 und 4 Einzelheiten der erfindungsgemäßen Detektorvorrichtung 10 beschrieben.

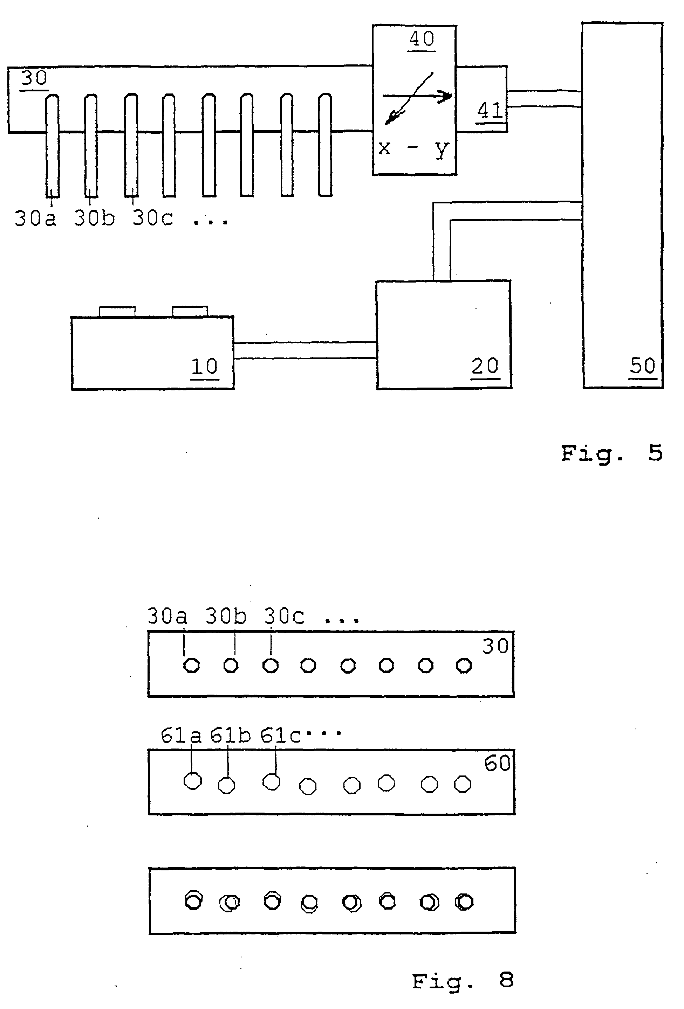

Die Detektorvorrichtung 10 umfaßt gemäß Fig. 3 zwei Detektorabschnitte 110a, 110b, die auf einem Trägerblock 120 angebracht sind. Der Trägerblock 120 trägt ferner eine Schutzabdeckung 130, die die Oberseite des Trägerblocks 120 mit Ausnahme der Detektorabschnitte 110a, 110b bedeckt. Anstelle der Schutzabdeckung 130, die die Detektorabschnitte 110a, 110b frei läßt, kann ersatzweise vorgesehen sein, daß auf der Oberseite des Trägerblocks 120 Ausnehmungen angebracht (eingefräst) sind, in die die Teile der Detektorabschnitte 110a, 110b eingelassen sind. Damit wird ein Schutz der Detektordrähte gegen mechanische Einflüsse und eine Schallabschirmung gegenüber Störgeräuschen erzielt. Die Detektorabschnitte 110a, 110b weisen jeweils ein Mikrophon (s. Fig. 4) auf, das über Anschlußleitungen 140 mit dem Signalverarbeitungskreis 200 (s. Fig. 5) verbunden ist. Der Trägerblock 120 und die Schutzabdeckung 130 bestehen vorzugsweise aus einem massiven Kunststoffmaterial (z.B. Plexiglas). Die Höhe des Trägerblocks 120 (mit einer ggf. vorgesehenen Trägerplatte 121) kann so gewählt sein, daß die Höhe der Detektorabschnitte 110a, 110b etwa der Höhe eines zu beschickenden Substrats in Bezug auf einen Dispensierkopf entspricht, der untersucht werden soll. Alternativ ist es möglich, bei Einsatz der Detektorvorrichtung mit einer beliebigen Höhe den Abstand des Dispensierkopfes von den Detektorabschnitten 110a, 110b (z- Richtung) zu erfassen und diesen Abstand beim späteren Betrieb des Dispensierkopfes bei der Einstellung der Höhe über einem Substrat zu berücksichtigen.

Einzelheiten der Detektorabschnitte 110a, 110b sind (ohne den Trägerblock und die Schutzabdeckung) in Fig. 4 gezeigt. Die Detektorabschnitte 110a, 110b umfassen jeweils einen Detektordraht (oder Tropfenfangdraht) 11a, 11b , der schwingungsgekoppelt mit einem Mikrophon 13a, 13b verbunden ist. Jeder Detektordraht 11a, 11b ist gerade ausgerichtet. Hierzu ist jeweils eine Spanneinrichtung 14a, 15a, 14b, 15b vorgesehen, die einen Spannbügel 14a, 14b und ein Trägerelement 15a, 15b umfaßt. Jeder Spannbügel 14a, 14b wird durch das jeweilige Trägerelement 15a, 15b so ausgerichtet, daß die aufgespannten Detektordrähte 11a, 11b zueinander einen vorbestimmten Winkel (vorzugsweise <90°, z.B. rund 45°, bilden und dadurch eine Detektortargetebene aufspannen. Im Einsatzfall ist die Detektortargetebene parallel zur x-y-Ebene der Stelleinrichtung (nicht gezeigt) eines Dispensierkopfes mit dem Dispenser 30a.

Die Enden der Detektordrähte 11a, 11b sind jeweils an den Enden der Spannbügel 14a, 14b eingespannt. Es erfolgt eine Vorspannung derart, daß im erwarteten Einsatztemperaturbereich jeder Detektordraht so weit gestreckt ist, daß er zwischen den Spannbügelenden gerade verläuft. Jeder Detektordraht bildet einen oben genannten Wechselwirkungsbereich. Durch die in diesem Fall linienhafte Gestalt des Wechselwirkungsbereiches besitzt dieser eine allseits gerade Begrenzung. Es ist jedoch auch denkbar, als Schwingungselement eine Schwingungsmembran einzusetzen, die zur Realisierung des oben erläuterten Auswertungsprinzips eine gerade Begrenzung in Bezug auf die Bildung der auftreffenden Tropfenfolge besitzen muß.

Die Detektordrähte 11a, 11b bestehen aus einem elastischen, schwingungsfähigen Material. Es handelt sich vorzugsweise um Drähte aus Metallen mit einer hohen Schalleitfähigkeit, wie z.B. Kupfer, so daß die Positionierung des Mikrophons in Bezug auf den Detektordraht unproblematisch ist. Bei dem dargestellten Beispiel befindet sich das Mikrophonkoppelelement 12a, 12b in der Nähe des jeweiligen Detektorfadenendes, jedoch mit Abstand vom Spannbügelende. Jedes Detektorkoppelelement 12a, 12b ist mit dem jeweiligen Mikrophon, vorzugsweise mit der jeweiligen Mikrophonmembran, verbunden. Die Detektordrähte 11a, 11b besitzen einen Durchmesser von rd. 40 μm. Allgemein ist der Durchmesser jedes Detektordrahtes so ausgewählt, daß einerseits die Schalldämpfung genügend niedrig und andererseits die Drahtstabilität genügend hoch ist. Bei jedem Draht erfolgt eine Dämpfung der mechanischen Schwingung, die jedoch so niedrig sein muß, daß die Schwingung mit der nachfolgenden Signalverarbeitung genügend reproduzierbar erfaßt werden kann. Wenn der Draht zu dünn ist, besteht die Gefahr von Rissen während des Auftreffens von Mikropartikeln beim Detektionsvorgang. Die Spannbügeldurchmesser betragen rd. 0,9 mm.

Die Elemente der Detektorabschnitte 110a, 110b sind über schalldämmende Halterungen mit dem Trägerblock 120 (s. Fig. 3) verbunden. Die schalldämmenden Halterungen bestehen beispielsweise aus Schaumstoffpolsterungen 16 oder vergleichbaren Dämpfungseinrichtungen. Für die Trägerelemente 15a, 15b ist eine gemeinsame Halterung vorgesehen. Es ist möglich, beide Spannbügel 14a, 14b an einem gemeinsamen Trägerelement zu befestigen.

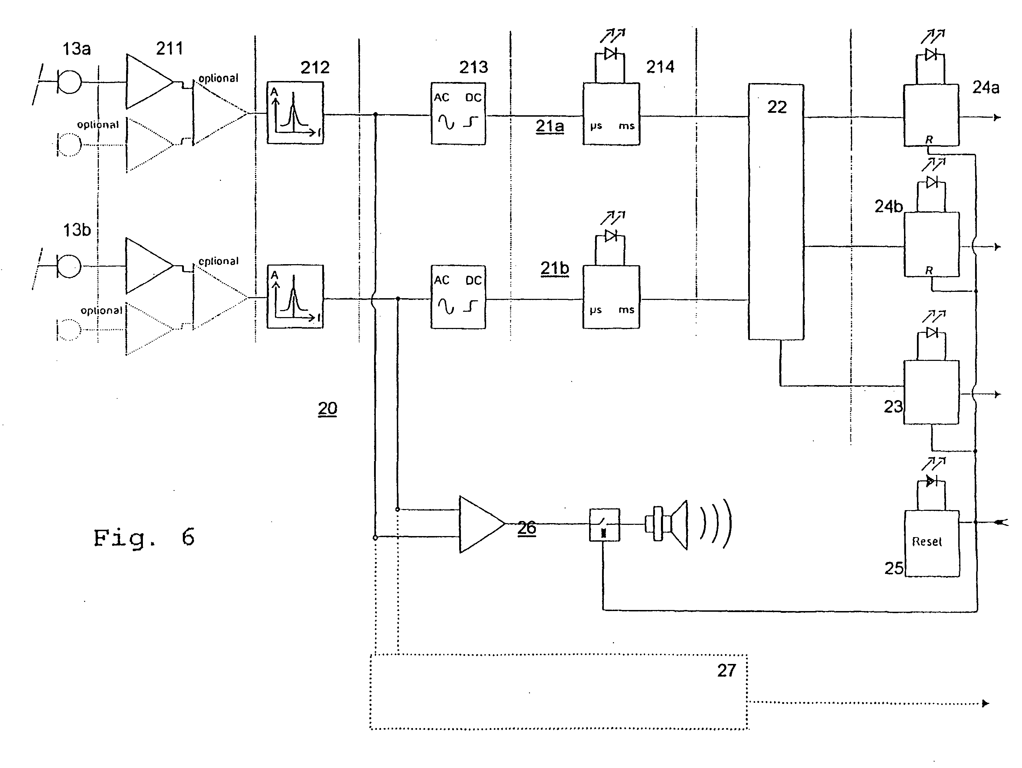

Fig. 5 zeigt schematisch die Kombination der beschriebenen Detektorvorrichtung 10 mit einem Dispensierkopf 30 zur Bildung einer Kalibriereinrichtung für den Dispensierkopf. Die Detektorvorrichtung 10 ist mit einem Signalverarbeitungskreis 20 verbunden, der zur Ableitung von digitalen Steuersignalen aus den Detektorsignalen der Detektorvorrichtung 10 eingerichtet ist und dessen Einzelheiten unten unter Bezug auf Fig. 6 beschrieben werden. Die digitalen Steuersignale werden an eine Steuereinrichtung 50 gegeben, die beispielsweise durch einen Computer mit zwei Digitaleingängen und einem Digitalausgang gebildet wird. Die Steuereinrichtung 50 liefert Signale an die (x-y-z-) Stelleinrichtung 40 mit dem Positionsgeber 41, mit denen der Dispensierkopf 30 in der x-y-Ebene parallel zur Detektortargetebene und dazu senkrecht in einer z-Richtung verfahrbar ist. Der Dispensierkopf 30 besteht beispielsweise aus einer Mehrzahl reihenförmig angeordneter Pipetten 30a, 30b, 30c ...., die beim bestimmungsgemäßen Einsatz mit verschiedenen Substanzen beschickt sind.

Der Signalverarbeitungskreis 20 umfaßt gemäß Fig. 6 für jeden der Signalwandler (z.B. Mikrophone 13a, 13b) der Detektorvorrichtung jeweils einen Digitalsignalkanal 21a, 21b, und einen Logikkreis 22, eine Fehleranzeige 23, Treffersignalkreise 24a, 24b, einen Rücksetzkreis 25 und eine Audioeinrichtung 26. Zusätzlich kann ein Schallerkennungskreis 27 (wie z.B. RSC-164 von Sensory Inc., USA) vorgesehen sein, der zur weiteren Kontrolle bei der Signalauswertung durch Bereitstellung eines Signals bei Erkennen eines Tropfengeräusches eingerichtet ist.

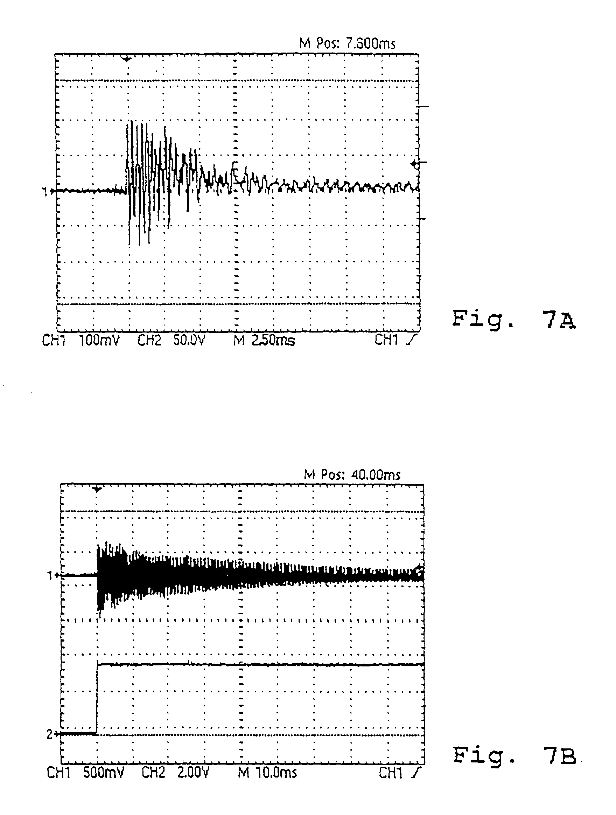

Der Digitalsignalkanal 21a (und entsprechend der zweite Digitalsignalkanal 21b) enthält einen Vorverstärker 211, einen Bandpaß 212, einen Gleichrichter 213 und einen Verlängerungskreis 214. Mit dem Vorverstärker 211 wird das Detektorsignal vom Mikrophon 13a einer Vorverstärkung unterzogen. Am Bandpaß 212 wird das erwartete Tropfenfrequenzspektrum ausgefiltert. Wie aus Fig. 7a hervorgeht, besitzt ein schwingender Detektordraht nach Auftreffen eines Mikrotropfens ein charakteristisches Spektrum, dessen Frequenzschwerpunkt bei rd. 3,5 kHz liegt und auf das der Bandpaß 212 eingerichtet ist. Nach dem Bandpaß besitzt das gefilterte Detektorsignal eine Kurvenform gemäß Fig. 7b (obere Kurve). Das gefilterte Detektorsignal wird einer Gleichrichtung zur Bildung eines Signals mit TTL-Pegel (TTL-Impuls) am Gleichrichter 213 unterzogen. Das gleichgerichtete Signal besitzt die Form gemäß Fig. 7b (untere Kurve). Am Verlängerungskreis 214 wird der TTL- Impuls vom μs in den ms-Bereich umgewandelt. Das Anliegen des verlängerten Impulses wird mit einer Leuchtdiode angezeigt.

Der Logikkreis 22 ist zum Ausschluß von Fehlersignalen vorgesehen. Falls an den Digitalsignalkanälen 21a, 21b gleichzeitig TTL-Impulse ausgelöst werden, so bedeutet dies, daß das Detektorsignal nicht durch das Auftreffen eines Tropfens, sondern durch ein beide Detektordrähte gleichzeitig treffendes Störereignis ausgelöst wurde. In diesem Fall wird an der Fehleranzeige 23 eine Anzeige vorgenommen und ein Fehlersignal an die Steuereinrichtung 50 (s. Fig. 5) gegeben.

Falls bei Tropfendetektion ein TTL-Impuls entweder am Kanal 21a oder am Kanal 21b anliegt, so wird das entsprechende Signal an einem der Treffersignalkreise 24a, 24b weitergegeben, die jeweils mit einer Leuchtdiode anzeigen, ob der erste oder zweite Detektordraht getroffen wurde. Die Treffersignalkreise 24a, 24b dienen wiederum einer Verlängerung der Anzeigezeit, um eine visuelle Beobachtung durch den Bediener zu ermöglichen. Die Digitalsignale aus den Treffersignalkreisen werden jeweils an die Steuereinrichtung 50 weitergegeben, die mit dem Achsensteuersystem (Steuereinrichtung 40, Positionsgeber 41 s. Fig. 5) verbunden ist.

Der Signalverarbeitungskreis 20 enthält ferner die Rücksetzschaltung 25, die einerseits zu Beginn der Messung mit einem Steuersignal rückgesetzt (z.B. auf "Hoch" oder "Aktiv") werden kann und nach einer korrekten Signalerfassung durch die Steuereinrichtung 50 ein Rücksetzsignal erhält. Dieses wird ebenfalls an die Treffersignalkreise 24a, 24b gegeben.

Die Audioeinrichtung 26 dient der Hörbarmachung des Tropfengeräusches. Sie enthält einen NF-Verstärker mit nachgeschaltetem Lautsprecher, dessen Ansprechen vom Zustand eines Rücksetzschalters abläuft, der mit der Rücksetzschaltung 25 verbunden ist.

Zusätzlich zur Entstörungsfunktion des Logikkreises 22 kann erfindungsgemäß für jeden Digitalsignalkanal ein Zusatzschallwandler 215 und ein Vorverstärker 216 vorgesehen sein, dessen Ausgangssignal gemeinsam mit dem Ausgangssignal des Vorverstärkers 211 einer Differenzverstärkung am Differenzverstärker 217 unterzogen wird, dessen Ausgangssignal am Bandpaß 212 anliegt. Diese zusätzlichen Schaltungskomponenten sind vorzugsweise bei Betrieb der Detektorvorrichtung in einer Umgebung mit einem hohen Störpegel vorgesehen. Der Störpegel wird laufend mit einem Zusatzmikrophon aufgenommen und durch den Differenzverstärker mit dem Nutzsignal vom Mikrophon 13a des Detektors verglichen.

Für die nachfolgende Erfassung von aktuellen Koordinaten des Positionsgebers 41 (s. Fig. 5) ist in der Regel lediglich eine schnelle und verzögerungsarme Erfassung des Tropfenauftreffens und somit die Vorderflanke jedes TTL-Impulses von Interesse. Generell wird bei der Tropfenfolge lediglich das Signal ausgewertet, das der erste, den jeweiligen Detektordraht treffende oder die Begrenzung des Wechselwirkungsbereiches überschreitende Tropfen im Signalverarbeitungskreis auslöst. Dies gilt insbesondere für den Fall, daß die Mikrotropfen größer als die Durchmesser der Detektordrähte sind. Die Folgetropfen werden durch geeignete Wahl des Rücksetzsignals von der Detektion ausgeschlossen.

Die Steuereinrichtung 50 ist neben der Verarbeitung der Digitalsignale vom Signalverarbeitungskreis 20 zur Berechnung der Abweichungskoordinaten, wie sie oben erläutert wurden, und zur Bereitstellung von Korrektursignalen an den Positionsgeber 41 bei funktionsgemäßem Einsatz des Dispensierkopfes 30 zur Beschickung eines Substrats eingerichtet. Diese Korrektursignale ermöglichen es vorteilhafterweise, daß der Dispensierkopf 30 so manipuliert werden kann, daß Mikrotropfen aus jeder der Mikropipetten 30a, 30b, 30c, .... mit hoher Genauigkeit (Fehler <10 ...20 μm) auf eine vorbestimmte Substratposition geschossen werden können. Damit wird erreicht, daß die Ortsgenauigkeit der Mikropartikelplazierung von ggf. auftretenden Fehlausrichtungen der einzelnen Dispenser unabhängig wird und nur noch von der Genauigkeit der Positionseinstellung der Stelleinrichtung abhängig ist.

Der Signalverarbeitungskreis 20 gemäß Fig. 6 kann zusätzlich mit einer Signalauswertungsschaltung (nicht gezeigt) versehen sein, die zur Ermittlung der Tropfengeschwindigkeit aus Detektorsignalen eingerichtet ist. Allgemein wird die Geschwindigkeit von Mikropartikeln entsprechend einer der folgenden Verfahrensweisen erfaßt. Gemäß einer ersten Möglichkeit erfolgt ein mehrfacher Beschuß eines Detektorabschnittes der Detektorvorrichtung jeweils mit gleichbleibender x-y-Dispensierkopfposition, jedoch jeweils aus verschiedenen Höhen (z-Richtung) in Bezug auf den jeweiligen Detektorabschnitt. In Abhängigkeit von der Höhe tritt das für den Treffer charakteristische TTL-Signal zu verschiednen Zeitpunkten auf. Aus den Zeitdifferenzen der Auftreffzeiten und den entsprechenden Höhendifferenzen wird unter Annahme einer beschleunigungsfreien Bewegung die Geschwindigkeit berechnet. Alternativ ist es möglich, beim Einsatz piezoelektrisch arbeitender Mikropipetten einen elektrischen Auslöseimpuls für den piezoelektrischen Geber als Startimpuls und das Auftreff-TTL-Signal als Endimpuls für eine Zeitmessung zu verwenden, wobei sich wiederum die Geschwindigkeit aus dem Verhältnis der meßbaren Flugstrecke zur gemessenen Start-Ende-Zeit ergibt. Schließlich ist es auch möglich, bei einer elektroakustischen Detektorvorrichtung den Startimpuls vom jeweiligen Schallwandler abzuleiten. Werden beispielsweise bei einem Mikrophon die Mittel zur elektromagnetischen Abschirmung entfernt, so spricht das Mikrophon auf einen elektromagnetischen Impuls an, der beim Anlegen des Auslöseimpulses vom piezoelektrischen Geber abgestrahlt wird.

**Patentansprüche**

1. Verfahren zur Erfassung der Auftreffpunkte von Mikropartikeln, die sich von mehreren Dispensern (30a, 30b, 30c, ...) einer Dispenserreihe (30) zu einem Träger (120) bewegen, mit den Schritten:

   - Verfahren des Dispensierkopfes unter Abgabe einer Folge von Mikropartikeln aus einem Referenzdispenser (30a) über einer Detektorvorrichtung auf dem Träger (120) mit zwei linear begrenzten, elektroakustischen oder elektrooptischen Wechselwirkungsbereichen, die eine Targetebene aufspannen, entlang mindestens zweier, gerader paralleler Fahrstrecken (I, II),

- Ermitteln der Referenzdispenserkoordinaten $(P_1, P_2)$ für die Dispensierkopfpositionen, in denen Mikropartikel auf die Wechselwirkungsbereiche treffen,
- Verfahren des Dispensierkopfes unter Abgabe einer Folge von Mikropartikeln aus mindestens einem Meßdispenser (30b, 30c ...) parallel zu den Fahrstrecken (I, II), und
- Ermitteln von Auftreffpunktkoordinaten $(Q_1, Q_2)$ für die Dispensierkopfpositionen, in denen Mikropartikel aus dem Meßdispenser auf die Wechselwirkungsbereiche treffen.

2. Verfahren gemäß Anspruch 1, bei dem aus den Auftreffpunktkoordinaten $(Q_1, Q_2)$, den Koordinaten des Dispensierkopfes und den Relativkoordinaten der Meßdispensern am Dispensierkopf Abweichungskoordinaten $(\Delta x, \Delta y)$ zwischen den Auftreffpunktkoordinaten und den Meßdispenserkoordinaten ermittelt werden.

3. Verfahren gemäß Anspruch 2, bei dem aus den Abweichungskoordinaten Korrektursignale für einen Positionsgeber des Dispensierkopfes zur Einstellung von Dispensern zur Bewegung der Mikropartikel auf vorbestimmte Substratpositionen ermittelt werden.

4. Verfahren gemäß Anspruch 3, bei dem auf der Grundlage der Abweichungskoordinaten die Dispenserkoordinaten des Dispensierkopfes kalibriert werden.

5. Verfahren gemäß einem der vorhergehenden Ansprüche, bei dem das Auftreffen eines Mikropartikels auf einen der Wechselwirkungsbereiche durch Ermittlung eines Detektorsignals erfaßt wird, das in ein Digitalsignal umgewandelt wird, dessen Anstiegsflanke für den Zeitpunkt des Auftreffens des Mikropartikels charakteristisch ist.

6. Verfahren zur Erfassung der Geschwindigkeit von Mikropartikeln, die sich von mehreren Dispensern (30a, 30b, 30c, ...) einer Dispenserreihe (30) zu einem Träger (120) bewegen, mit den Schritten:

- Positionieren des Dispensierkopfes über einer Detektorvorrichtung mit zwei linear begrenzten, elektroakustischen oder elektrooptischen Wechselwirkungsbereichen, die eine Targetebene aufspannen, derart, daß Mikropartikel aus einem der Dispenser auf einen der Wechselwirkungsbereiche treffen,
- Ermitteln der Mikropartikelgeschwindigkeit aus Wegabschnitten, die die Mikropartikel auf dem Weg vom Dispenser zum Wechselwirkungsbereich durchlaufen, und den zugehörigen zum Durchlaufen der Wegabschnitte erforderlichen Zeitabschnitte.

7. Verfahren gemäß Anspruch 6, bei dem der Wegabschnitt der Abstand vom Dispenser zum Wechselwirkungsbereich ist und der zugehörige Zeitabschnitt aus einem Auslösesignal des Dispensers und einem Detektorauftreffsignal der Detektorvorrichtung abgeleitet wird.

8. Verfahren gemäß Anspruch 6, bei dem Mikropartikel bei verschiedenen Dispenser-Wechselwirkungsbereich-Abständen abgegeben werden, deren Differenz den Wegabschnitt für die Geschwindigkeitsmessung bildet, wobei der Zeitabschnitt aus den Detektorauftreffsignalen für die verschiedenen Dispenserabstände abgeleitet wird.

9. Verfahren gemäß Anspruch 6, das mit einem Verfahren gemäß einem der Ansprüche 1 bis 5 kombiniert wird, um die Position und Geschwindigkeit von Mikropartikeln aus den Dispensern zu kalibrieren.

10. Detektorvorrichtung zur Erfassung der Auftreffpunkte oder Geschwindigkeit von Mikropartikeln, die von mehreren Dispensern (30a, 30b, 30c, ...) einer Dispenserreihe (30) abgegeben werden, mit zwei linear begrenzten, elektroakustischen oder elektrooptischen Wechselwirkungsbereichen, die unter Bildung eines vorbestimmten Winkels zueinander angeordnet sind und eine Targetebene aufspannen, wobei jeder Wechselwirkungsbereich dazu eingerichtet ist, ein Detektorsignal abzugeben, wenn ein Mikropartikel auf den Wechselwirkungsbereich trifft.

11. Detektorvorrichtung gemäß Anspruch 10, bei der jeder Wechselwirkungsbereich einen elektroakustischen Detektorabschnitt (110a, 110b) mit einem Schwingungselement aufweist, das mit einem Schallwandler schwingungsgekoppelt ist.

12. Detektorvorrichtung gemäß Anspruch 11, bei der das Schwingungselement ein Detektordraht (11a, 11b) und der Schallwandler ein Mikrophon (13a, 13b) ist.

13. Detektorvorrichtung gemäß Anspruch 10, bei der jeder Wechselwirkungsbereich einen elektrooptischen Detektorabschnitt aufweist, der von einem geraden, parallelen Lichtstrahl durchsetzt wird und mindestens ein Photoelement aufweist.

14. Kalibrierungseinrichtung für einen Dispensierkopf (30) mit einer Vielzahl von Dispensern (30a, 30b, 30c....), umfassend eine Detektorvorrichtung gemäß einem der Ansprüche 10 bis 13, einen Signalverarbeitungskreis (20) und eine Steuereinrichtung (50), die zur Erfassung von Dispensierkopfkoordinaten zu den Zeitpunkten eingerichtet ist, wenn Mikropartikel aus Dispensern auf die Wechselwirkungsbereiche treffen.

**Claims**

1. A method of determining the points of impingement of micro-particles which move from a plurality of dispensers (30a, 30b, 30c, ...) of a dispenser row (30) on to a substrate (120), with the steps:

   - moving the dispenser head while emitting a succession of micro-particles from a reference dispenser (30a) along at least two straight, parallel paths (I, II), over a detector device on the substrate (120) with two linearly bounded electro-acoustically or electro-optically interactive regions which extend over a target plane,
   - determining the reference dispenser coordinates ($P_1$, $P_2$) for the dispenser head positions in which micro-particles impinge on the interactive regions,
   - moving the dispenser head parallel to the path of travel (I, II), while emitting a succession of micro-particles from at least one measuring dispenser (30b, 30c, ...) and
   - determining point of impingement coordinates ($Q_1$, $Q_2$) for the dispenser head positions in which micro-particles from the measuring dispenser impinge on the interactive regions.

2. A method according to claim 1, in which deviation coordinates ($\Delta x$, $\Delta y$) between the impingement point coordinates and the measuring dispenser coordinates are determined from the impingement point coordinates ($Q_1$, $Q_2$), the coordinates of the dispenser head and the relative coordinates of the metering dispensers on the dispenser head.

3. A method according to claim 2, in which correction signals for a position transducer of the dispenser head for adjusting dispensers for moving the micro-particles to predetermined substrate positions are determined from the deviation coordinates.

4. A method according to claim 3, in which the dispenser coordinates of the dispenser head are calibrated on the basis of the deviation coordinates.

5. A method according to any of the preceding claims, in which the impingement of a micro-particle on one of the interactive regions is detected by detecting a detector signal which is converted into a digital signal, whose rising flank is characteristic of the instant of impingement of the micro-particle.

6. A method of determining the speed of micro-particles which move from a plurality of dispensers (30a, 30b, 30c, ...) of a dispenser row (30) on to a substrate (120), with the steps:

   - positioning the dispenser head over a detector device with two linearly bounded, electro-acoustically or electro-optically interactive regions, which extend over a target plane, in such a manner that micro-particles from one of the dispensers impinge on one of the interactive regions,
   - determining the micro-particle speed from path segments which the micro-particles traverse on the way from the dispenser to the interactive region and the associated intervals of time for traversing the path segments.

7. A method according to claim 6, in which the path segment is the distance from the dispenser to the interactive region and the associated interval of time is derived from a trigger signal of the dispenser and a detector impingement signal of the detector device.

8. A method according to claim 6, in which micro-particles are emitted with different dispenser to interactive region distances, whose difference forms the path segment for the speed measurement, wherein the interval of time is determined from the detector impingement signals for the different dispenser distances.

9. A method according to claim 6, which is combined with a method according to any of claims 1 to 5, in order to calibrate the position and speed of micro-particles from the dispensers.

10. A detector device for determining the points of impingement or speed of micro-particles, which are emitted from a plurality of dispensers (30a, 30b, 30c, ...) of a dispenser row, with two linearly bounded, electro-acoustically or electro-optically interactive regions, which are arranged relative to one another to form a predetermined angle and extend over a target plane, wherein each interactive region is arranged to emit a detector signal when a micro-particle impinges on the interactive region.

11. A detector device according to claim 10, wherein each interactive region comprises an electro-acoustic detector section (110a, 110b) with a vibrating element which is vibrationally coupled to a sound transducer.

**12.** A detector device according to claim 11, in which the vibrating element is a detector wire (11a, 11b) and the sound transducer is a microphone (13a, 13b).

**13.** A detector device according to claim 10, in which each interactive region comprises an electro-optical detector section which is traversed by a straight, parallel beam of light and comprises at least one photo-element.

**14.** A calibrating device for a dispenser head (30) with a plurality of dispensers (30a, 30b, 30c, ...), comprising a detector device according to any of claims 10 to 13, a signal processing circuit (20) and a control device (50), which is arranged to determine dispenser head coordinates at the instants when micro-particles from dispensers impinge on the interactive regions.


**Revendications**

**1.** Procédé pour l'enregistrement des points d'impact de microparticules, qui se déplacent depuis plusieurs distributeurs (30a, 30b, 30c...) d'une série de distributeurs (30) à un support (120), comprenant les étapes suivantes :

- procédé de la tête de distribution avec émission d'une succession de microparticules provenant d'un distributeur de référence (30a) au moyen d'un dispositif détecteur sur le support (120) avec deux zones d'interaction limitées au plan linéaire, électroacoustiques ou électrooptiques, qui supporte un plan cible, le long d'au moins deux trajets de déplacement droits et parallèles (I, II),
- calcul des coordonnées de l'alimentateur de référence ($P_1$, $P_2$) pour les positions de la tête d'alimentation, dans lesquelles des microparticules arrivent sur les zones d'interaction,
- procédé de la tête d'alimentation avec émission d'une succession de microparticules à partir d'au moins un distributeur de mesure (30b, 30c...) parallèlement aux trajets de déplacement (I, II) et
- calcul des coordonnées du point d'impact ($Q_1$, $Q_2$) pour les positions de la tête d'alimentation, dans lesquelles des microparticules arrivant de l'alimentateur de mesure arrivent sur les zones d'interaction.

**2.** Procédé selon la revendication 1, avec lequel, à partir des coordonnées du point d'impact ($Q_1$, $Q_2$), des coordonnées de la tête d'alimentation et des coordonnées relatives des alimentateurs de mesure sur la tête d'alimentation, on détermine les coordonnées d'écart ($\Delta x$, $\Delta y$) entre les coordonnées du point d'impact et les coordonnées de l'alimentateur de mesure.

**3.** Procédé selon la revendication 2, avec lequel, à partir des coordonnées d'écart, on détermine des signaux de correction pour un capteur de position de la tête d'alimentation pour le réglage de distributeurs pour le déplacement des microparticules sur des positions de substrat prédéfinies.

**4.** Procédé selon la revendication 3, avec lequel les coordonnées de distributeur de la tête d'alimentation sont étalonnées sur la base des coordonnées d'écart.

**5.** Procédé selon l'une quelconque des revendications précédentes, avec lequel l'arrivée d'une microparticule sur l'une des zones d'interaction est détectée par le calcul d'un signal de détecteur, qui est converti en un signal numérique, dont le flanc croissant est caractéristique pour l'instant de l'arrivée de la microparticule.

**6.** Procédé pour l'enregistrement de la vitesse de microparticules, qui se déplacent à partir de plusieurs distributeurs (30a, 30b, 30c...) d'une série de distributeurs (30) vers un support (120), avec les étapes suivantes :

- positionnement de la tête d'alimentation au moyen d'un dispositif détecteur avec deux zones d'interaction limitées de façon linéaire, électroacoustiques ou électrolytiques, qui supportent un plan cible, de telle sorte que des microparticules provenant de l'un des distributeurs arrivent sur l'une des zones d'interaction,
- détermination de la vitesse des microparticules à partir de tronçons de chemin, que les microparticules parcourent sur le trajet entre l'alimentateur et la zone d'interaction, et des laps de temps spécifiques nécessaires pour parcourir les tronçons de chemin.

**7.** Procédé selon la revendication 6, avec lequel le tronçon de chemin est la distance du distributeur à la zone d'interaction et le laps de temps spécifique est déduit d'un signal de déclenchement du distributeur et d'un signal d'arrivée sur le détecteur du dispositif détecteur.

**8.** Procédé selon la revendication 6, avec lequel les microparticules sont envoyées avec différents espacements distributeur-zone d'interaction, dont la différence constitue le tronçon de chemin pour la vitesse de mesure, le laps de temps étant déduit des signaux d'arrivée sur le détecteur pour les différents espacements de distributeur.

**9.** Procédé selon la revendication 6, qui est combiné avec un procédé selon l'une quelconque des revendications 1 à 5, afin d'étalonner la position et la vitesse de microparticules provenant des distributeurs.

**10.** Dispositif détecteur pour la saisie des points d'impact ou de la vitesse de microparticules, qui sont envoyées par plusieurs distributeurs (30a, 30b, 30c...) d'une série de distributeurs (30), avec deux zones d'interaction limités au plan linéaire, électroacoustiques ou électrooptiques, qui sont disposées l'une par rapport à l'autre en formant un angle prédéfini et sous-tendent un plan-cible, chaque zone d'interaction étant aménagée de façon à envoyer un signal de détection lorsqu'une microparticule arrive sur la zone d'interaction.

**11.** Dispositif détecteur selon la revendication 10, avec lequel chaque zone d'interaction présente une partie de détecteur (110a, 110b) électroacoustique avec un élément d'oscillation, qui est couplé au niveau de l'oscillation avec un transducteur de son.

**12.** Dispositif détecteur selon la revendication 11, avec lequel l'élément d'oscillation est un fil détecteur (11a, 11b) et le transducteur de son à microphone (13a, 13b).

**13.** Dispositif détecteur selon la revendication 10, sur lequel chaque zone d'interaction présente une partie de détecteur électrooptique, qui est traversée par un faisceau de lumière droit et parallèle et présente au moins un photo couple.

**14.** Dispositif d'étalonnage pour une tête d'alimentation (30) avec un grand nombre de distributeurs (30a, 30b, 30c...), comprenant un dispositif détecteur selon l'une quelconque des revendications 10 à 13, un circuit de traitement de signal (20) et un dispositif de commande (50), qui est équipé pour l'enregistrement de coordonnées de tête d'alimentation aux instants où des microparticules provenant de distributeurs arrivent sur les zones d'interaction.

30a  30b  30c  . . .

<u>30</u>

I

II

11a        11b

<u>10</u>

Y

X

Fig. 1

$\Delta x$

$R_1$

$\Delta y$

c

$P_3$

$P_1$

a

$Q_1$

S

c'

$R_2$

b

$P_4$

$Q_2$

$P_2$

I

II

Fig. 2

12

Fig. 3

Fig. 4

Fig. 5

Fig. 8

24a

R

24b

R

23

Reset

25

22

214

21a

μs ms

21b

μs ms

213

AC DC

AC DC

212

A

211

optional

optional

13a

optional

13b

optional

20

26

27

Fig. 6

M Pos: 7.500ms

CH1 100mV    CH2 50.0V    M 2.50ms    CH1 ╱

Fig. 7A

M Pos: 40.00ms

CH1 500mV    CH2 2.00V    M 10.0ms    CH1 ╱

Fig. 7B